# EUROPEAN PATENT APPLICATION

(11) **EP 4 447 293 A1**
(43) Date of publication of application: **16.10.2024**
(21) Application number: 23861654.4
(22) Date of filing: 22.08.2023
(51) Int. Cl.: H02K 11/00, H02K 11/40, H02H 9/02

(54) **MOTOR SHAFT CURRENT SUPPRESSION MECHANISM AND ELECTRIC DRIVE SYSTEM**

(30) Priority: 27.02.2023 CN 202310198196
(71) Applicant: Jing-Jin Electric Technologies Co., Ltd, Beijing 100023 (CN)
(72) Inventor: HAO, Ziqiang, Chaoyang District, Beijing 100023 (CN); ZHANG, Kaihe, Chaoyang District, Beijing 100023 (CN); LIU, Xia, Chaoyang District, Beijing 100023 (CN)
(74) Representative: Praxi Intellectual Property Milano
(86) International application number: PCT/CN2023/114234
(87) International publication number: WO 2024/178922

(57) **Abstract**

A motor shaft current suppression mechanism and an electric drive system are disclosed. The motor shaft current suppression mechanism is applied to the electric drive system. The electric drive system comprises a motor controller (110) and a motor (120). The suppression mechanism (400) comprises: a first capacitor (410) for connecting each phase line of three phase output in the motor controller (110) to a housing of the motor controller (110) itself; and/or, a second capacitor (420) for connecting each phase line of three phase output in the motor (120) to a housing of the motor (120) itself. The present disclosure can suppress the shaft current on the bearings and protect the bearings of the motor (120). The motor shaft current suppression mechanism of the present disclosure can be used in electric drive systems.

## Description

### CROSS REFERENCING OF RELATED APPLICATIONS

This application claims priority from the Chinese patent application No. 202310198196.9 filed with the Chinese Patent Office on February 27, 2023 and entitled "MOTOR SHAFT CURRENT SUPPRESSION MECHANISM AND ELECTRIC DRIVE SYSTEM", the content of which is hereby incorporated by reference in its entirety.

### TECHNICAL FIELD

The present disclosure relates to the technical field of electric drive systems, in particular to a motor shaft current suppression mechanism and an electric drive system.

### BACKGROUND

With the rapid development of the new energy vehicle industry, the requirements for the drive system and power generation system as the core components of new energy vehicles are also increasing. With the breakthrough of battery technology and the transformation of power devices in controllers from traditional IGBT modules to silicon carbide (SiC) modules, the requirements for high-voltage, high-power, high-speed, and high integration of new energy drive systems and power generation systems are increasing year by year.

However, due to the high voltage of the voltage platform and the increased switching frequency of the controller, the problem of motor bearings being corroded by shaft currents may occur.

In the prior art, the impact of shaft current on electric drive systems cannot be effectively reduced.

### SUMMARY

The embodiments of the present disclosure provide a motor shaft current suppression mechanism and an electric drive system which can suppress the shaft current in a low-cost manner and improve the service life of the electric drive system.

The embodiments of the present disclosure adopts the following technical solutions.

In a first aspect, the embodiments of the present disclosure provide a motor shaft current suppression mechanism, applied to an electric drive system comprising a motor controller and a motor, wherein the suppression mechanism comprises:
a first capacitor for connecting each phase line of three phase output in the motor controller to a housing of the motor controller itself;
and/or,
a second capacitor for connecting each phase line of three phase output in the motor to a housing of the motor itself.

In some embodiments, one end of the first or second capacitor is connected to a copper bar of each phase line, and the other end is grounded through the housing.

In some embodiments, the first capacitor comprises at least three first capacitors and the second capacitor comprises at least three second capacitors, and grounding ends of the three first or second capacitors are respectively connected to the housing, an end cover, or other equipotential grounding points of the controller or the motor.

In some embodiments, the grounding ends of the three first or second capacitors are firstly connected together and then connected to the housing, the end cover, or other equipotential grounding points of the controller or the motor.

In some embodiments, a capacitance of the first capacitor or the second capacitor is chosen between 10 pF and 500 nF.

In some embodiments, the suppression mechanism is used to suppress a shaft current on a bearing, and the suppression mechanism is installed inside the housing of the controller, or installed on a PCB circuit board of the controller, or installed outside the housing of the controller, or installed inside the motor.

In some embodiments, a cooling design of the first capacitor and the second capacitor comprises a capacitor structure of perfluoroethylene or a capacitor structure of polytetrafluoroethylene.

In some embodiments, the first capacitor and the second capacitor comprise a fixed capacitor or a variable capacitor.

In some embodiments, the first capacitor and the second capacitor comprise any one or more of organic dielectric capacitors, inorganic dielectric capacitors, electrolytic capacitors, electric thermal capacitors, and air dielectric capacitors.

In some embodiments, the motor comprises any one or more of permanent magnet synchronous motors, asynchronous motors, or reluctance motors.

In a second aspect, the present disclosure provides an electric drive system comprising the motor shaft current suppression mechanism as described above.

The at least one technical solution adopted in the embodiments of the present disclosure can achieve the following beneficial effects. In the electric drive system, each phase line of the three phase output in the motor controller is connected to the housing of the motor controller itself through the first capacitor, thereby suppressing the shaft current on the bearing and protecting the motor bearings by increasing the capacitance. In addition, in the electric drive system, each phase line of the three phase output in the motor is connected to the housing of the motor itself through the second capacitor, thereby suppressing the shaft current on the bearing and protecting the motor bearings by increasing the capacitance.

### BRIEF DESCRIPTION OF DRAWINGS

The accompanying drawings described herein are intended to provide a further understanding of the present disclosure and constitute a part of the present disclosure. The illustrative embodiments and their explanations of the present disclosure are used to explain the present disclosure and do not constitute an improper limitation of the present disclosure. In the drawings:
FIG. 1(a) - FIG. 1(b) are schematic diagrams of blocking scheme for shaft current suppression in the electric drive system in the prior art;
FIG. 2(a) - FIG. 2(b) are schematic diagrams of new path adding scheme for shaft current suppression in the electric drive system in the prior art;
FIG. 3 is a schematic diagram of the hardware structure applicable to the motor shaft current suppression mechanism in embodiments of the present disclosure;
FIG. 4 is a schematic diagram of the structure of the motor shaft current suppression mechanism in embodiments of the present disclosure;
FIG. 5 is a schematic diagram of a first physical structure of the motor shaft current suppression mechanism in embodiments of the present disclosure;
FIG. 6 is a schematic diagram of a second physical structure of the motor shaft current suppression mechanism in embodiments of the present disclosure; and
FIG. 7(a) - FIG. 7(b) are schematic diagrams of the implementation principle of the motor shaft current suppression mechanism in embodiments of the present disclosure.

### DETAILED DESCRIPTION

In order to make the object, technical solutions, and advantages of the present disclosure clearer, the present disclosure will be described clearly and completely in conjunction with the specific embodiments and corresponding drawings. Obviously, the embodiments described are only part of rather than all of the embodiments of the present disclosure. Based on the embodiments in the present disclosure, all other embodiments obtained by those of ordinary skill in the art without paying creative work shall fall within the protection scope of the present disclosure.

The inventors found in research that the main reason for the shaft to suffer from electrical corrosion is the formation of bearing voltage at both ends of the motor bearing. When this voltage is greater than the breakdown threshold voltage of the oil film between the inner and outer raceways of the bearing and the balls, the breakdown discharge phenomenon will occur. The shaft current will instantly generate huge heat at the breakdown point, thereby causing the metal near the breakdown point to melt, and resulting in pits on the surface of the bearing raceways and balls. The molten metal particles will slowly deteriorate the bearing lubricant, reduce the threshold voltage of the bearing oil film breakdown, and make the bearing more prone to breakdown discharge, thereby forming a vicious cycle.

In further research, it was found that there are two sources of bearing voltage that causes shaft current generation.

One is the differential mode voltage generated by the axial asymmetry of the electric or magnetic field of the motor.

The other is the high-frequency common mode voltage generated due to the modulation characteristics of the controller.

Among them, the differential mode voltage generated by the axial asymmetry of the electric or magnetic field of the motor can be reduced by improving the machining and assembly accuracy of related components of the motor, and its proportion in the bearing voltage is relatively low.

The main source of bearing voltage is thus the common mode voltage. Due to the modulation characteristics of the PWM inverter itself, the sum of output voltages of three phases of the inverter is not zero at any time, and thus a high-frequency common mode voltage is inevitably generated. The non-zero high-frequency common mode voltage dv/dt in the inverter speed control system is the main source of generating the bearing voltage and bearing current.

However, the dv/dt of the current mainstream IGBT inverters can reach several kilovolts per microsecond, the dv/dt of the newly emerged SiC devices can reach tens of kilovolts per microsecond, and the switching frequency can exceed 100 kHz, which may result in more severe common mode voltage. With the continuous improvement of motor voltage platforms in recent years, 800 volts will become the mainstream configuration in the future, which will lead to further increase in bearing voltage, and the problem of bearing corrosion by bearing current will become more severe.

There are two types of schemes to solve the problem of shaft current.

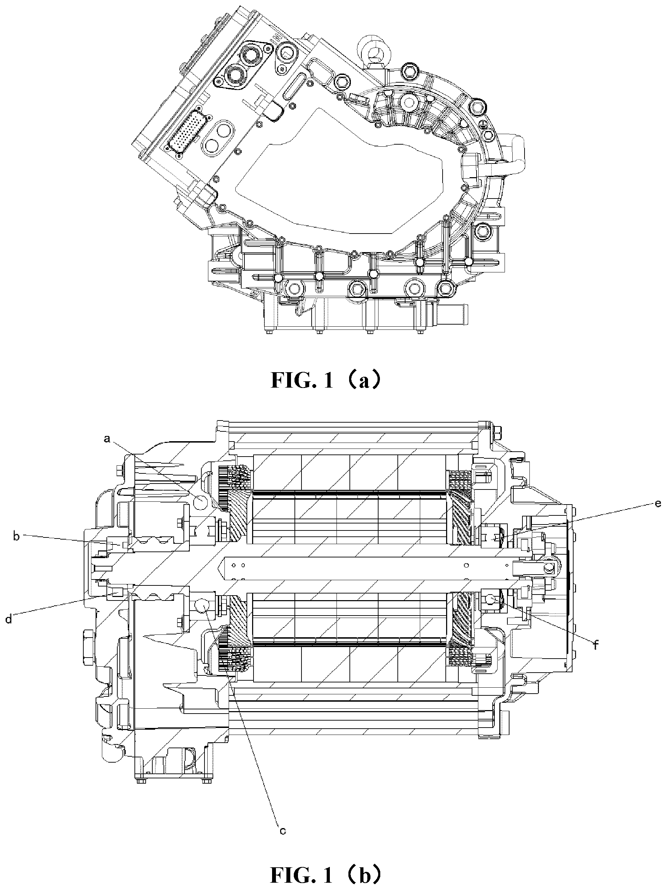

The first type is to block the path of shaft current, as shown in FIGS. 1(a) and 1(b), in which using insulated bearings, insulated bearing grease, insulated shafts, or insulated bearing chambers is the main scheme. The primary disadvantage of this type of scheme is that the cost remains high, and as the electric drive system operates, the insulation layer gradually wears out, and serious shaft current corrosion of bearings will still occur in the middle of its lifespan.

Using insulated shafts or insulated bearings is a common shaft current blocking scheme, in which the current is blocked mainly by coating an insulation material. The marks a, b, c, d, e, and f in FIG. 1(b) are the positions on the shaft where insulation treatment is applied.

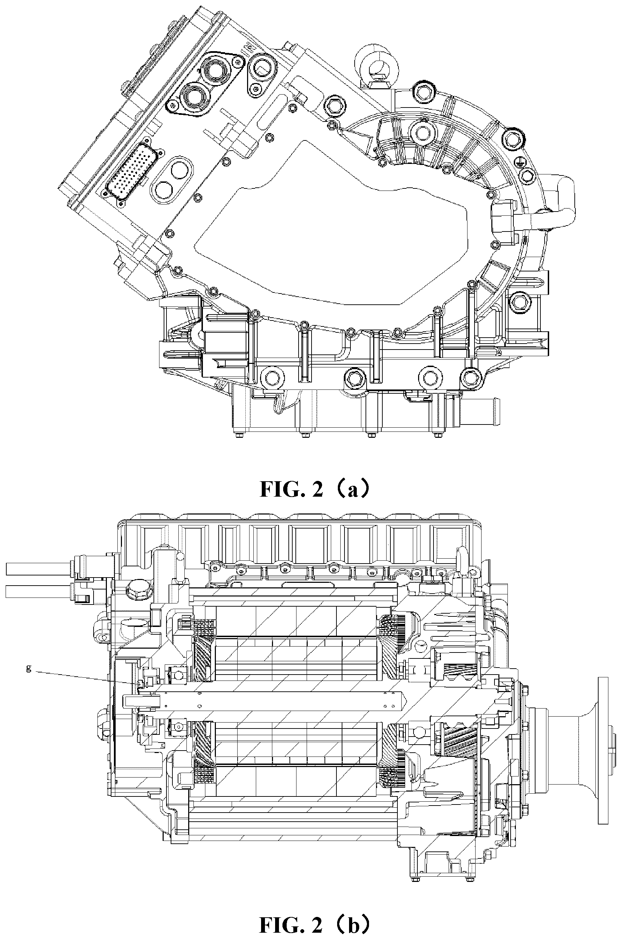

The other type is to add a new path, as shown in FIGS. 2(a) and 2(b). The new path has a smaller impedance relative to the shaft current path, so the shaft current can be exported from the new path to the ground without passing through the bearing, thereby avoiding shaft current corrosion of the bearing. The main scheme of this type is using conductive rings, conductive carbon brushes, or conductive oil seals. The primary disadvantage of this type of scheme is that although the cost is reduced compared to the blocking scheme, but it is still at a relatively high level; moreover, there is a high requirement for contact resistance. After the electric drive system operates for a period of time, the increase in contact resistance due to wear will inevitably generate shaft current components on the bearing, which will continue to corrode the bearing. Moreover, this scheme has little effect when applied to electric drive systems with lubricating oil. The mark g in FIG. 2(b) is the position on the shaft where the conductive ring path is newly added.

With respect to the above problems, the embodiments of the present disclosure provide a motor shaft current suppression mechanism, in which the three phase lines of the electric drive system are connected to the housing through a capacitor, thereby suppressing the shaft current on the bearing and protecting the motor bearings by increasing the capacitance.

The technical solutions provided in embodiments of the present disclosure will be explained in detail below in conjunction with the accompanying drawings.

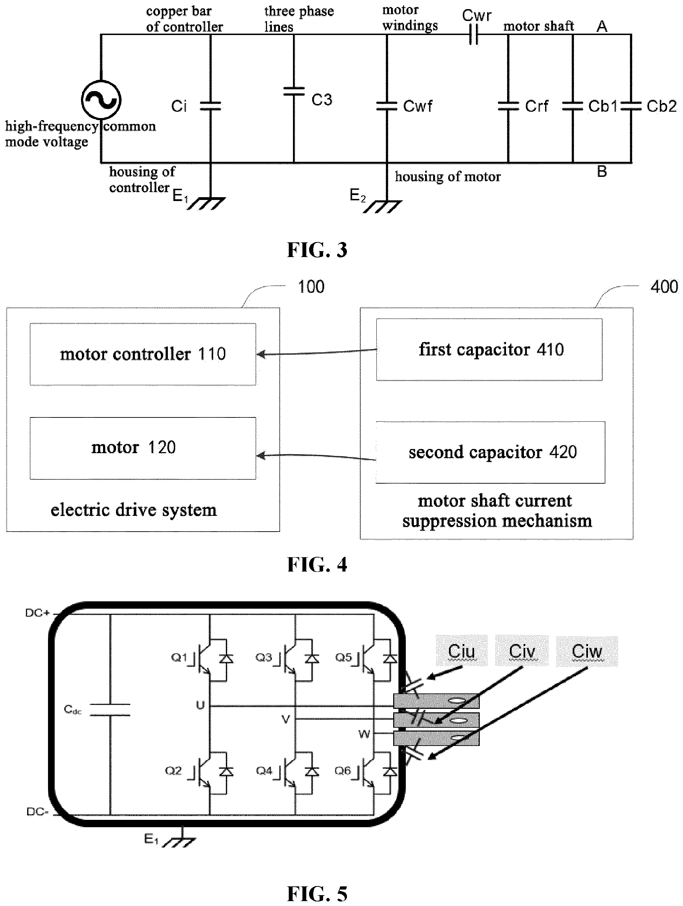

FIG. 3 is a schematic diagram of the hardware structure applicable to the motor shaft current suppression mechanism in embodiments of the present disclosure, where Ci is the capacitance from the controller copper bar to the housing, Cwf is the capacitance from the motor windings to the housing, Cwr is the capacitance from the motor windings to the motor shaft, Crf is the capacitance from the motor shaft to the housing, Cb1 and Cb2 are the capacitors of two bearings, E1 is the controller grounding point, and E2 is the motor grounding point, C3 is the newly added capacitor proposed in the embodiments of the present disclosure.

When the circuit is working, the high-frequency common mode voltage will be transferred to the two bearings through these capacitors. The voltage distributed on the bearings corresponds to the voltage between points A and B in FIG. 3 and is associated with the capacitance values at each location.

Usually, Ci and Cwf are relatively small, which may cause a higher voltage to be distributed on the bearing. Therefore, an additional capacitor C3 can be introduced to ground the three phase lines of the controller or motor, thereby dividing the high-frequency common mode voltage to reduce the voltage transferred to the bearing and achieve the goal of suppressing bearing corrosion.

An embodiment of the present disclosure provides a motor shaft current suppression mechanism, as shown in FIG. 4, which provides a schematic diagram of the motor shaft current suppression mechanism in the embodiment of the present disclosure. The motor shaft current suppression mechanism is applied to an electric drive system 100 comprising a motor controller 110 and a motor 120.

The suppression mechanism 400 comprises: a first capacitor 410 for connecting each phase line of three phase output in the motor controller to a housing of the motor controller 110 itself; and/or, a second capacitor 420 for connecting each phase line of three phase output in the motor to a housing of the motor 120 itself.

Since the first capacitor 410 connects each phase line of the three phase output in the motor controller to the housing of the motor controller 110 itself, by additionally introducing the first capacitor 410 to ground the three phase lines of the controller, the high-frequency common mode voltage is divided, thereby reducing the voltage transferred to the bearing.

Since the second capacitor 420 connects each phase line of the three phase output in the motor to the housing of the motor 120 itself, by additionally introducing the second capacitor 420 to ground the three phase lines of the motor, the high-frequency common mode voltage is divided, thereby reducing the voltage transferred to the bearing.

In the motor shaft current suppression mechanism described above, the three phase lines of the electric drive system are connected to the housing (grounded) by newly adding a capacitor, thereby achieving the effect of suppressing the shaft current on the motor bearings and protecting the bearings.

The motor shaft current suppression mechanism described above also has the following advantages:
First, compared to shaft current suppression structures in the prior art, the cost is significantly reduced. Compared to the blocking scheme and the new path adding scheme, the cost is also reduced. The production process is simple, and the installation process is also simple.

Second, the bearing current is suppressed throughout its lifespan, so the bearings are protected throughout its lifespan.

Finally, the structure is suitable for various environments, such as oil cooled motors whose bearings are open bearings. Preferably, the relevant conductive mechanism can still operate in oil without reducing its functionality.

In an embodiment of the present disclosure, one end of the first or second capacitor is connected to a copper bar of each phase line, and the other end is grounded through the housing.

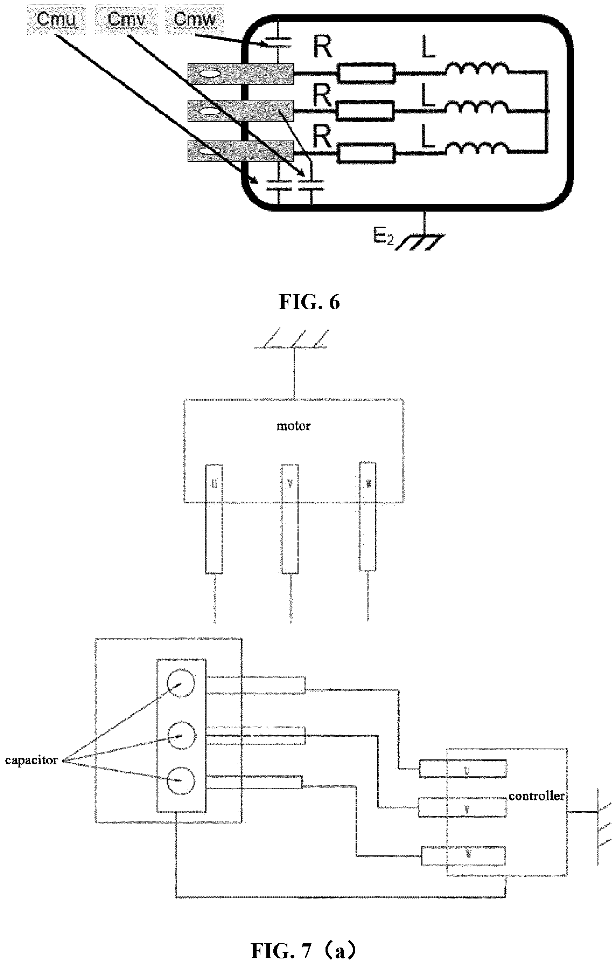

As shown in FIG. 5, at the controller end, the input copper bar of each phase of three phases is connected with a capacitor (C_{IU}, C_{IV}, Ciw), and the other end of the capacitor is grounded through the housing. Alternatively, as shown in FIG. 6, at the motor end, each phase of three phase lines is connected with a capacitor (Cₘᵤ, Cₘᵥ, C_{mw}), and the other end of the capacitor is grounded through the housing.

As shown in FIG. 7(a), the shaft current suppression scheme of the electric drive system is that each phase line of the three phase output in the motor controller is connected to the housing of the motor controller itself by adding the first capacitor. One end of the first capacitor is connected to the copper bar of each phase line, and the other end is grounded through the housing.

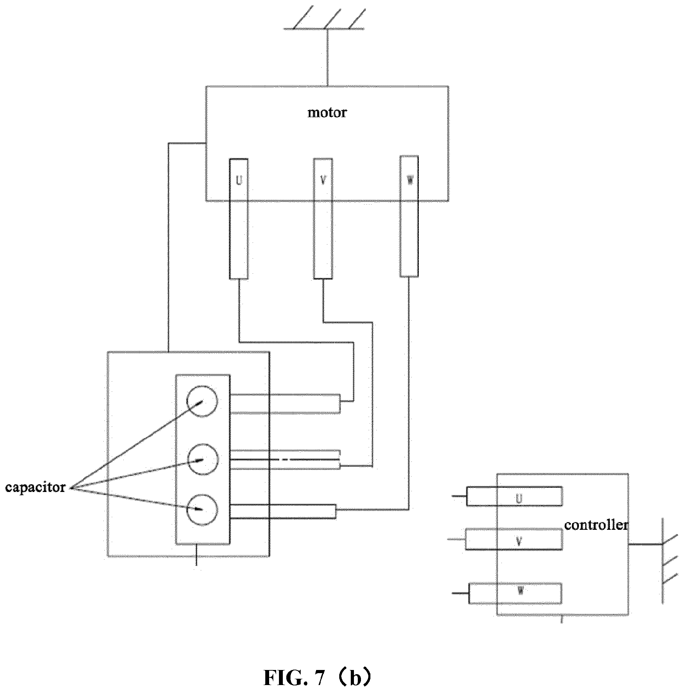

As shown in FIG. 7(b), the shaft current suppression scheme of the electric drive system is that each phase line of the three phase output in the motor controller is connected to the housing of the motor controller itself by adding the second capacitor. One end of the second capacitor is connected to the copper bar of each phase line, and the other end is grounded through the housing.

Moreover, the first capacitor comprises at least three first capacitors, and the second capacitor comprises at least three second capacitors. The grounding ends of the three first or second capacitors are respectively connected to the housing, the end cover, or other equipotential grounding point of the controller or the motor.

In an embodiment of the present disclosure, the first capacitor comprises at least three first capacitors, and the second capacitor comprises at least three second capacitors. The grounding ends of the three first or second capacitors are respectively connected to the housing, the end cover, or other equipotential grounding point of the controller or the motor.

The grounding ends of the three first or second capacitors are firstly connected together and then connected to the housing, the end cover, or other equipotential grounding point of the controller or the motor.

With respect to the three phase lines of the controller or motor in the electric drive system, each phase is connected to the housing through a capacitor. These three capacitors constitute a shaft current suppression mechanism. The shaft current suppression mechanism composed of three capacitors may be installed inside the housing of the controller, or integrated into the PCB circuit board of the controller, or installed outside the housing of the controller, or installed inside the motor, or installed on the end cover.

It should be noted that, other equipotential grounding points are not listed one by one in the embodiments of the present disclosure. Any equipotential grounding point is acceptable as long as its potential is the same as the ground.

In an embodiment of the present disclosure, the capacitance of the first capacitor or the second capacitor is chosen between 10 pF and 500 nF.

Considering that the switching frequency of mainstream IGBT controllers is around 10kHz, and the SiC controllers have a higher switching frequency and more severe high-frequency harmonic content, a capacitor will have more advantages than a resistor in exporting high-frequency voltage. On the three phase output path of the electric drive system, by using capacitors to connect the three phase lines to the housing to export the high-frequency voltage through the capacitors, the shaft voltage on the bearing can be reduced so that it is not sufficient to break through the oil film, thereby achieving the purpose of protecting the bearing.

Specifically, for platforms with different voltages and controllers with switching frequencies, the capacitance of the capacitors is generally chosen between 10 pF and 500 nF.

In an embodiment of the present disclosure, the suppression mechanism is used to suppress the shaft current on the bearing, and the suppression mechanism is installed inside the housing of the controller, or installed on the PCB circuit board of the controller, or installed outside the housing of the controller, or installed inside the motor.

On the three phase lines of the controller or motor in the electric drive system, each phase is connected to the housing through a capacitor. The three capacitors constitute a shaft current suppression mechanism. The shaft current suppression mechanism composed of three capacitors may be installed inside the housing of the controller, or integrated into the PCB circuit board of the controller, or installed outside the housing of the controller, or installed inside the motor, or installed on the end cover.

In an embodiment of the present disclosure, the cooling design of the first capacitor and the second capacitor comprises a capacitor structure of perfluoroethylene or a capacitor structure of polytetrafluoroethylene.

The cooling design of capacitors can be any type of cooling design. The capacitor structure of perfluoroethylene or polytetrafluoroethylene is good in oil and high temperature resistance performance.

In an embodiment of the present disclosure, the first capacitor and the second capacitor comprise a fixed capacitor or a variable capacitor.

The capacitor can be a fixed capacitor or a variable capacitor.

In an embodiment of the present disclosure, the first capacitor and the second capacitor comprise any one or more of organic dielectric capacitors, inorganic dielectric capacitors, electrolytic capacitors, electric thermal capacitors, and air dielectric capacitors.

The capacitors may be various types of capacitors such as organic dielectric capacitors, inorganic dielectric capacitors, electrolytic capacitors, electric thermal capacitors, and air dielectric capacitors.

In an embodiment of the present disclosure, the motor comprises any one or more of permanent magnet synchronous motors, asynchronous motors, or reluctance motors.

The motors are not limited to permanent magnet synchronous motors, asynchronous motors, and reluctance motors.

In an embodiment of the present disclosure, there is also provided an electric drive system comprising a motor shaft current suppression mechanism. The motor shaft current suppression mechanism is applied to the electric drive system. The electric drive system comprises a motor controller and a motor. The suppression mechanism comprises: a first capacitor for connecting each phase line of three phase output in the motor controller to a housing of the motor controller itself; and/or, a second capacitor for connecting each phase line of three phase output in the motor to a housing of the motor itself.

In some embodiments, one end of the first or second capacitor in the electric drive system is connected to a copper bar of each phase line, and the other end is grounded through the housing.

In some embodiments, the first capacitor comprises at least three first capacitors and the second capacitor comprises at least three second capacitors in the electric drive system, and the grounding ends of the three first or second capacitors are respectively connected to the housing, an end cover, or other equipotential grounding points of the controller or the motor.

In some embodiments, the grounding ends of the three first or second capacitors in the electric drive system are firstly connected together and then connected to the housing, the end cover, or other equipotential grounding points of the controller or the motor.

In some embodiments, a capacitance of the first capacitor or the second capacitor in the electric drive system is chosen between 10 pF and 500 nF.

In some embodiments, the suppression mechanism in the electric drive system is used to suppress a shaft current on a bearing, and the suppression mechanism is installed inside the housing of the controller, or installed on a PCB circuit board of the controller, or installed outside the housing of the controller, or installed inside the motor.

In some embodiments, a cooling design of the first capacitor and the second capacitor in the electric drive system comprises a capacitor structure of perfluoroethylene or a capacitor structure of polytetrafluoroethylene.

In some embodiments, the first capacitor and the second capacitor in the electric drive system comprise a fixed capacitor or a variable capacitor.

In some embodiments, the first capacitor and the second capacitor in the electric drive system comprise any one or more of organic dielectric capacitors, inorganic dielectric capacitors, electrolytic capacitors, electric thermal capacitors, and air dielectric capacitors.

In some embodiments, the motor in the electric drive system comprises any one or more of permanent magnet synchronous motors, asynchronous motors, or reluctance motors.

The above only describes the embodiments of the present disclosure, and is not intended to limit the scope of protection of the present disclosure. For those skilled in the art, the present disclosure can have various modifications and variations. Any modification, equivalent substitution, improvement, etc. made within the spirit and principle of the present disclosure shall all fall within the scope of the claims of the present disclosure.

## Claims

1. A motor shaft current suppression mechanism, applied to an electric drive system comprising a motor controller (110) and a motor (120), **characterized in that**: the suppression mechanism (400) comprises:
a first capacitor (410) for connecting each phase line of three phase output in the motor controller (110) to a housing of the motor controller (110) itself;
and/or,
a second capacitor (420) for connecting each phase line of three phase output in the motor (120) to a housing of the motor (120) itself.

2. The motor shaft current suppression mechanism according to claim 1, **characterized in that**: one end of the first or second capacitor is connected to a copper bar of each phase line, and the other end is grounded through the housing.

3. The motor shaft current suppression mechanism according to claim 2, **characterized in that**: the first capacitor (410) comprises at least three first capacitors and the second capacitor (420) comprises at least three second capacitors, and grounding ends of the three first or second capacitors are respectively connected to the housing, an end cover, or other equipotential grounding points of the controller or the motor (120).

4. The motor shaft current suppression mechanism according to claim 3, **characterized in that**: the grounding ends of the three first or second capacitors are firstly connected together and then connected to the housing, the end cover, or other equipotential grounding points of the controller or the motor (120).

5. The motor shaft current suppression mechanism according to claim 1, **characterized in that**: a capacitance of the first capacitor (410) or the second capacitor (420) is chosen between 10 pF and 500 nF.

6. The motor shaft current suppression mechanism according to claim 1, **characterized in that**: the suppression mechanism (400) is used to suppress a shaft current on a bearing, and the suppression mechanism (400) is installed inside the housing of the controller, or installed on a PCB circuit board of the controller, or installed outside the housing of the controller, or installed inside the motor (120).

7. The motor shaft current suppression mechanism according to claim 1, **characterized in that**: a cooling design of the first capacitor (410) and the second capacitor (420) comprises a capacitor structure of perfluoroethylene or a capacitor structure of polytetrafluoroethylene.

8. The motor shaft current suppression mechanism according to claim 1, **characterized in that**: the first capacitor (410) and the second capacitor (420) comprise any one or more of organic dielectric capacitors, inorganic dielectric capacitors, electrolytic capacitors, electric thermal capacitors, and air dielectric capacitors.

9. The motor shaft current suppression mechanism according to claim 1, **characterized in that**: the motor (120) comprises any one or more of permanent magnet synchronous motors, asynchronous motors, or reluctance motors.

10. An electric drive system comprising the motor shaft current suppression mechanism according to any one of claims 1 to 9.
